# EUROPÄISCHE PATENTSCHRIFT

(11) **EP 2 454 802 B1**
(45) Veröffentlichungstag und Bekanntmachung des Hinweises auf die Patenterteilung: **01.05.2013**
(21) Anmeldenummer: 10722043.6
(22) Anmeldetag: 17.05.2010
(51) Int. Cl.: H02K 3/12, H02K 3/50, H02K 15/00

(54) **WICKELKOPFANORDNUNG**
END TURN ARRANGEMENT
AGENCEMENT DE TÊTES DE BOBINE

(30) Priorität: 13.07.2009 DE 102009032883
(43) Veröffentlichungstag der Anmeldung: 23.05.2012
(73) Patentinhaber: Siemens Aktiengesellschaft, 80333 München (DE)
(72) Erfinder: GERMISHUIZEN, Johannes, 90480 Nürnberg (DE); GRÜNING, Arne, 94032 Passau (DE); JUNGE, Martin, 94481 Grafenau (DE)
(86) Internationale Anmeldenummer: PCT/EP2010/056698
(87) Internationale Veröffentlichungsnummer: WO 2011/006693

(56) Entgegenhaltungen:
- US-A1- 2004 041 491
- US-A1- 2005 264 123
- US-B1- 6 781 276
- NIETHAMMER F.: "Elektromaschinenbau", 1946, CARL WINTER UNIVERSIT{TSVERLAG, HEIDELBERG page 27,

## Beschreibung

Die Erfindung betrifft eine Wickelkopfanordnung eines Stators einer dynamoelektrischen Maschine.

Die Erfindung kommt überall dort vorteilhaft zum Einsatz, wo elektrische Maschinen als Generator oder auch als Motor im höheren Leistungsbereich eingesetzt werden. Als Beispiel hierfür seien getriebelose Windkraftanlagen und Gezeitenkraftwerke genannt, die sehr große Generatoren zur Umwandlung mechanischer Energie in elektrische Energie erfordern.

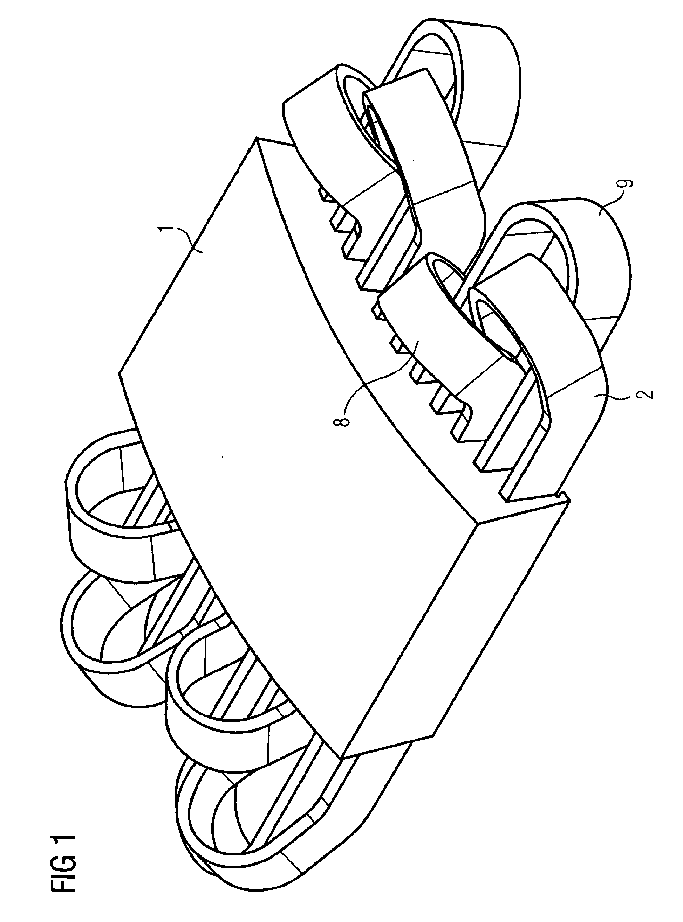

Elektrische Maschinen im höheren Leistungsbereich sind häufig mit so genannten Formspulen ausgeführt, wie sie beispielsweise aus der DE 195 29 970 C1 bekannt sind. Hierbei handelt es sich um vorgeformte Leiterbündel, die mit einem in der Regel streifenförmigen Isoliermaterial umwickelt sind. Zur Herstellung einer Formspule wird üblicherweise zunächst eine Rohspule gewickelt und anschließend derart gespreizt, dass sie in Nuten des Ständers eingelegt werden kann. Da sich die Leiter der einzelnen Formspulen stückweise im Bereich der Wickelköpfe überlappen, werden die Wickelköpfe einiger Leiter derart abgekröpft, dass sie nach Einbau in den Stator in radial Richtung betrachtet nach außen weisen. Auf diese Art und Weise ist es möglich, eine Überlappung von Formspulen mit gekröpften Wickelköpfen und Formspulen mit ungekröpften Wickelköpfen zu ermöglichen. Eine solche Anordnung ist in Figur 1 für eine Einschicht-Formspulenwicklung zu erkennen. Wie zu erkennen ist, sind in die Nuten des Ständers abwechselnd Formspulen eingelegt, die sich bezüglich der Kröpfung ihrer Wickelköpfe unterscheiden. Jeweils zwei der verwendeten Formspulen weisen eine Kröpfung im Bereich der Wickelköpfe auf, die in radialer Richtung betrachtet nach außen weist. Diese beiden gekröpften Formspulen überlappen jeweils eine ungekröpfte Formspule.

Die US 6 781 276 B1 offenbart ein Segment für einen ringförmigen Stator gemäß der Präambel des Anspruchs 1.

Das Lehrbuch "Elektromaschinenbau" von F. Niethammer, Carl Winter Universitätsverlag, Heidelberg 1946 offenbart in der Abbildung 18 auf Seite 27 einen Wickelkopf, bei dem Formspulen radial nach außen und nach innen gekröpft sind.

Der Erfindung liegt die Aufgabe zu Grunde, dass von den Wickelköpfen der Formspulen einer elektrischen Maschine benötigte Bauvolumen auf konstruktiv einfache Art und Weise zu reduzieren.

Die Lösung dieser Aufgabe gelingt durch **die Merkmale des Anspruchs 1.**

Vorteilhafte Ausgestaltungen der Erfindung sind den abhängigen Patentansprüchen zu entnehmen.

Der Erfindung liegt die Erkenntnis zu Grunde, dass ein Teil der Formspulen, die in die Nuten des Stators der elektrischen Maschine eingelegt sind, einen in radialer Richtung nach innen abgekröpften Wickelkopf aufweisen können, wenn der ringförmigen Stator segmentiert aufgebaut ist. Ein derartig segmentierter Stator ist aus mehreren kreisbogenförmigen Elementen aufgebaut. Montiert man diese kreisbogenförmigen Segmente aneinander, erhält man den geschlossenen zylinderförmigen Stator der dynamoelektrischen Maschine.

Bei der Montage der dynamoelektrischen Maschine können nun die erfindungsgemäßen mit den Formspulen bestückten Segmente um einen Läufer herum montiert werden. Erst die segmentierte Ausführung des Ständers erlaubt es, Ständer und Läufer zu der dynamoelektrischen Maschine trotz der nach innen gerichteten Wickelköpfe zusammenzusetzen. Bei einer herkömmlichen Bauform, bei der der Ständer als vollständiger Hohlzylinder ausgeführt ist, wäre dies nicht möglich, da die nach innen gerichteten Wickelköpfe ein Einschieben des Läufers in den Ständer verhindern würden.

Die segmentierte Ausführung des ringförmigen Stators hat darüberhinaus den Vorteil, dass die dynamoelektrische Maschine sehr einfach in Einzelteile zerlegt zu ihrem späteren Einsatzort transportiert werden kann. Dies ist insbesondere bei sehr großen elektrischen Maschinen von Vorteil. Die einzelnen Ständersegmente nehmen deutlich weniger Volumen in Anspruch und können daher auch bei sehr großen Maschinen noch über die Straße transportiert werden. So können beispielsweise Generatoren von direkt angetriebenen Windkraftanlagen, die einen Durchmesser von mehr als 5 m aufweisen können, relativ einfach zu ihrem Einsatzort transportiert werden.

Die Anzahl der benötigten Spulenvarianten lässt sich in vorteilhafter Ausgestaltung der Erfindung dadurch reduzieren, dass die erste und zweite Formspule baugleich und entgegengesetzt in die Nuten eingelegt sind. Bei dieser Ausgestaltung werden beide Formspulentypen zunächst auf identische Art und Weise hergestellt. Die gewickelten Rohspulen werden anschließend gespreizt, so dass sie in die dafür vorgesehenen Nuten des Ständers eingelegt werden können. Schließlich werden die Wickelköpfe an beiden Enden abgekröpft. Die erste Formspule wird sodann derart in die Nuten des Ständers eingelegt, dass ihre Wickelköpfe in radialer Richtung betrachtet nach außen weisen, das heißt, der Rotationsachse des Ständers abgewandt sind.

Umgekehrt wird die zweite Formspule derart in die Nuten des Ständers eingelegt, dass ihre Wickelköpfe in radialer Richtung betrachtet nach innen weisen, das heißt, der Rotationsachse des Ständers zugewandt sind.

Durch die unterschiedliche Anordnung der Formspulen in den Nuten beziehungsweise der zugehörigen Wickelköpfe kann die Wickelkopfausladung verkürzt werden. Hierfür müssen jedoch nicht zwei unterschiedliche Spulenarten gefertigt werden. Die erste und die zweite Formspule können exakt baugleich sein. Sie werden lediglich umgekehrt in die Nuten eingelegt, so dass sich die unterschiedliche Orientierung der Wickelköpfe ergibt, die die gewünschte Verkürzung der Wickelkopfausladung zur Folge hat.

Die Wickelkopfausladung kann in vorteilhafter Ausgestaltung der Erfindung dadurch weiter verkürzt werden, dass das Segment mindestens eine dritte ungekröpfte Formspule aufweist, die zwischen der ersten und der zweiten Formspule angeordnet ist. Hierdurch kann im Bereich der Wickelköpfe eine noch dichtere Packung der Leiter erzielt werden. Zwischen den jeweils unterschiedlich abgekröpften Formspulen befindet sich jeweils eine Formspule, die die Gestalt der dritten Formspule aufweist. Über den Umfang des Ständers betrachtet wechseln sich somit die Formspulen der Art ab, dass auf die erste Formspule die dritte Formspule folgt und auf die dritte Formspule die zweite Formspule folgt. Auf diese Art und Weise lässt sich mit nur zwei unterschiedlichen Formspulentypen die maximale Verkürzung der Wickelkopfausladung erzielen, wenn in vorteilhafter Weise die erste Formspule mit der zweiten Formspule baugleich ausgeführt ist.

Ein Einlegen der vorgefertigten Formspulen in die Nuten des Ständers wird bei einer vorteilhaften Ausführungsform der Erfindung dadurch erleichtert, dass ein Hinleiter jeder Formspule in einer ersten Nut angeordnet ist, deren Nutflanken parallel zu den Nutflanken einer zweiten Nut ausgerichtet sind, in der der zugehörige Rückenleiter angeordnet ist. Bei einer herkömmlichen Ausführung der Nuten eines Ständers einer dynamoelektrischen Maschine sind die Nutflanken der Nuten, in die Hin- und Rückenleiter eingelegt sind, um einen von der Nutzahl des Ständers abhängigen Winkel gegeneinander verdreht. Hierdurch wird das Einlegen der Formspulen in die Nuten erschwert, da die Formspulen bei diesem Prozess noch ein wenig aufgespreizt werden müssen. Durch die parallele Anordnung der Nutflanken wird das Einlegen der Formspulen hingegen deutlich erleichtert.

Eine dynamoelektrische Maschine mit Innenläufer lässt sich in vorteilhafter Ausgestaltung der Erfindung dadurch realisieren, dass die Nuten in radialer Richtung des Stators betrachtet nach innen weisen.

Alternativ kann auch eine dynamoelektrische Maschine mit Außenläufer in weiterer vorteilhafter Ausgestaltung der Erfindung erzielt werden, wenn die Nuten in radialer Richtung des Stators betrachtet nach außen weisen.

Im Folgenden wird die Erfindung anhand der in den Figuren dargestellten Ausführungsbeispiele näher beschrieben und erläutert. Es zeigen:
- FIG 1: ein Segment eine Stators mit einer aus dem Stand der Technik bekannten Wickelkopfanordnung von Einschicht-Formspulen,
- FIG 2: das Segment mit einer Wickelkopfanordnung von Einschicht-Formspulen gemäß einer Ausführungsform der Erfindung, und
- FIG 3: eine Ausgestaltung der Nuten eines Segments eines Stators mit parallelflankigen Nuten.

FIG 1 zeigt ein Segment 1 eines Stators mit einer aus dem Stand der Technik bekannten Wickelkopfanordnung von Einschicht-Formspulen. Das Segment 1 umfasst Nuten, in die drei verschiedene Typen von Formspulen eingelegt sind. Diese Formspulen unterscheiden sich bezüglich ihrer Kröpfung im Bereich der Wickelköpfe. Da die Formspulen aufgrund der überlappenden Anordnung im Bereich der Wickelköpfe übereinander angeordnet sind, wird diese Form der Wicklung auch als Etagen-Wicklung bezeichnet.

Ein erster Formspulentyp 9 ist ohne Kröpfung ausgeführt. Ein zweiter Formspulentyp 2 besitzt eine leichte Kröpfung, die in axialer Richtung des Stators betrachtet in das Maschinenäußere weist. Da sich Formspulen des ersten Formspulentyps 9 mit Formspulen des zweiten Formspulentyps 2 überlappen, liegen die Wickelköpfe des zweiten Formspulentyps 2 über denen des ersten Formspulentyps 9.

Weiterhin umfasst das Segment 1 des Stators einen dritten Formspulentyp 8. Dieser weist eine stärkere Kröpfung als der zweite Formspulentyp 2 auf. Somit liegt der Wickelkopf des dritten Formspulentyps 8 noch über dem des zweiten Formspulentyps 2. Der dritte Formspulentyp 8 ist in dieselbe Richtung wie der zweite Formspulentyp 2 gekröpft.

Diese Form der Etagen-Wicklung ist von elektrischen Maschinen herkömmlicher Bauart bekannt. Unter Maschinen herkömmlicher Bauart ist in diesem Zusammenhang eine elektrische Maschine mit einem gewöhnlichen Stator zu verstehen, der aus vollständigen kreisförmigen Elektroblechen gefertigt ist und somit nicht die hier beschriebene Segmentierung aufweist. In diesem Fall können die Wickelköpfe der Formspulen nur nach außen gekröpft werden, damit der Läufer der elektrischen Maschine in den Stator eingeschoben werden kann.

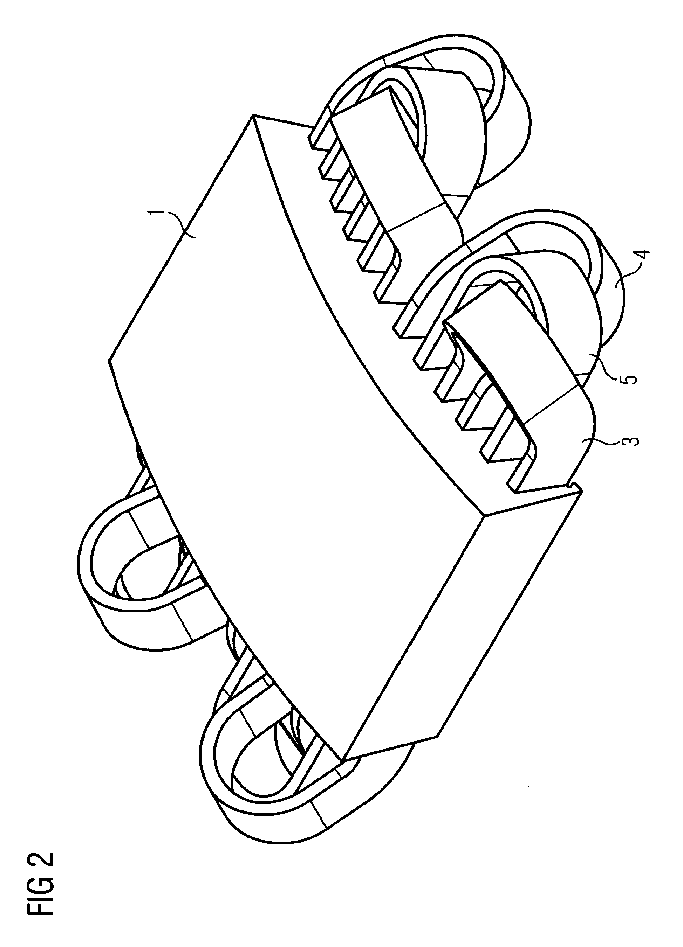

FIG 2 zeigt das Segment 1 mit einer Wickelkopfanordnung von Einschicht-Formspulen gemäß einer Ausführungsform der Erfindung. Im Gegensatz zu der Ausführung aus Figur 1 sind hier nur zwei unterschiedliche Typen von Formspulen in die Nuten des Ständersegments 1 eingelegt. Eine erste Formspule 3 besitzt eine Kröpfung, die in radialer Richtung des Ständers betrachtet nach außen weist. Der Wickelkopf dieser ersten Formspule 3 entspricht dem Wickelkopf einer zweiten Formspule 4, die auch ansonsten exakt baugleich mit der ersten Formspule 3 ist. Sie ist lediglich genau umgekehrt in die Nuten des Segments 1 eingelegt. Durch diese umgekehrte Anordnung zeigt der Wickelkopf der zweiten Formspule 4 in radialer Richtung betrachtet nach innen, das heißt zum Mittelpunkt des Stators.

Zwischen der ersten Formspule 3 und der zweiten Formspule 4 befindet sich eine dritte Formspule 5, die ohne Kröpfung ausgeführt ist. Bei der hier dargestellten Etagen-Wicklung ist dieser ungekröpfte Wickelkopf zwischen dem nach außen gekröpften Wickelkopf der ersten Formspule 3 und dem nach innen gekröpften Wickelkopf der zweiten Formspule 4 angeordnet. Auf diese Art und Weise wird die Wickelkopfausladung des Segments 1 im Vergleich zu der Wickelkopfausladung gemäß Figur 1 deutlich verkürzt. Ferner ist die Fertigung eines solchen Segments 1 deutlich einfacher. Eine derartige Etagen-Wicklung benötigt nur zwei unterschiedliche Typen von Formspulen, eine gekröpfte Variante und eine ungekröpfte Variante. Es müssen nicht wie bei der Ausführung gemäß Figur 1 zwei unterschiedliche Kröpfungen gefertigt werden. Dies reduziert den Fertigungsaufwand erheblich.

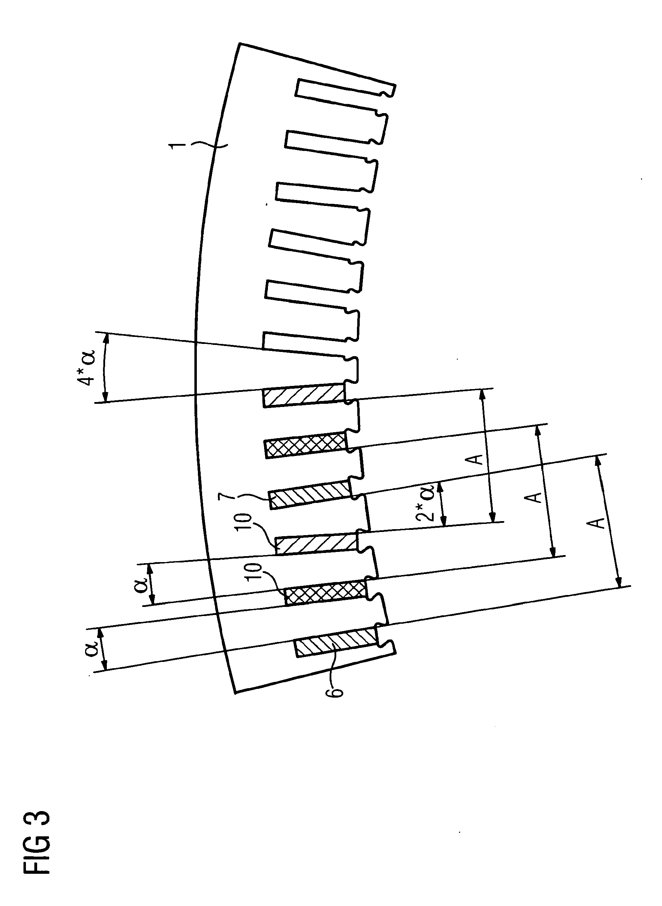

FIG 3 zeigt eine Ausgestaltung der Nuten eines Segments 1 eines Stators mit parallelflankigen Nuten. Diese parallelflankige Anordnung soll am Beispiel einer ersten Nut 6 und einer zweiten Nut 7 im Folgenden erläutert werden.

Die erste Nut 6 ist von der zweiten Nut 7 durch zwei weitere Nuten 10 beabstandet. Betrachtet man die Flanken der ersten und zweiten Nut 6,7, so stellt man fest, dass diese exakt parallelflankig sind. In die erste Nut 6 wird der Hinleiter der ersten Formspule 3 eingelegt. In die zweite Nut 7 wird der Rückleiter der ersten Formspule 3 eingelegt. Die beiden weiteren Nuten 10 werden durch die zweite Formspule 4 und die dritte Formspule 5 belegt.

Auch zu den weiteren Nuten 10 existieren parallelflankige Nuten, so dass auch hier jeweils Formspulen eingelegt werden können, die parallele Flanken aufweisen.

Diese Ausgestaltung der Nuten 6,7,10 erleichtert erheblich das Einlegen der Formspulen. Vor dem Einlegen müssen die Formspulen auf den geeigneten Nutabstand gespreizt werden. Danach können sie sehr einfach in die vorgesehenen Nuten eingelegt werden, ohne dass hierbei noch eine mechanische Verformung der Formspulen stattfindet. Dies wäre bei einer herkömmlichen Ausgestaltung der Nuten 6,7,10 nicht möglich. Vielmehr würde bei einer Innenläufermaschine die Formspule beim Einlegen in die Nuten noch weiter gespreizt, da der Abstand der Nuten voneinander in radialer Richtung betrachtet nach außen zunimmt.

## Patentansprüche

1. Segment (1) für einen ringförmigen Stator einer dynamoelektrischen Maschine, das einen kreisbogenförmigen Querschnitt umfasst und durch Anfügen eines oder mehrerer weiterer Segmente (1) gleicher Bauart zu dem Stator ergänzt werden kann, wobei das Segment (1) Nuten (6,7) aufweist, in denen mindestens eine erste Spule (3) und mindestens eine zweite Spule (4) in Form einer Etagen-Wicklung angeordnet sind, **dadurch gekennzeichnet, dass**
- die mindestens eine erste Spule (3) und die mindestens eine zweite Spule (4) Formspulen sind,
- die mindestens eine erste Formspule (3) im Bereich der Wickelköpfe in radialer Richtung des Stators nach außen gekröpft ist und
- die mindestens eine zweite Formspule (4) im Bereich der Wickelköpfe in radialer Richtung des Stators nach innen gekröpft ist,
wobei die erste und zweite Formspule (3,4) baugleich und entgegengesetzt in die Nuten (2) eingelegt sind.

2. Segment (1) nach Anspruch 1 mit mindes-tens einer dritten ungekröpften Formspule (5), die zwischen der ersten und der zweiten Formspule (3,4) angeordnet ist.

3. Segment (1) nach einem der vorherigen Ansprüche, wobei ein Hinleiter jeder Formspule (3,4,5) in einer ersten Nut (6) angeordnet ist, deren Nutflanken parallel zu den Nutflanken einer zweiten Nut (7) ausgerichtet sind, in der der zugehörige Rückleiter angeordnet ist.

4. Segment (1) nach einem der vorherigen Ansprüche, wobei die Nuten (5,7) in radialer Richtung des Stators betrachtet nach innen weisen.

5. Segment (1) nach einem der Ansprüche 1 bis 3, wobei die Nuten (6,7) in radialer Richtung des Stators betrachtet nach außen weisen.

6. Ringförmiger Stator mit mindestens zwei Segmenten (1) nach einem der Ansprüche 1 bis 5.

7. Elektrische Maschine, insbesondere Windkraftgenerator, mit einem ringförmigen Stator nach Anspruch 6.

8. Windkraftanlage mit einer elektrischen Maschine nach Anspruch 7.

## Claims

1. Segment (1) for a ring-shaped stator of a dynamoelectric machine which has a circular arc-shaped cross section and which, by adding one or more further segments (1) of the same design, can be supplemented to form the stator, wherein the segment (1) has slots (6, 7) in which at least one first coil (3) and at least one second coil (4) are arranged in the form of a tiered winding, **characterized in that**
- the at least one first coil (3) and the at least one second coil (4) are form-wound coils,
- the at least one first form-wound coil (3) is bent outwards in the radial direction of the stator in the region of the end turns, and
- the at least one second form-wound coil (4) is bent inwards in the radial direction of the stator in the region of the end turns,
wherein the first and second form-wound coil (3, 4) are of the same design and are laid in the slots (2) in opposite directions.

2. Segment (1) according to Claim 1 having at least one third non-bent form-wound coil (5) which is arranged between the first and the second form-wound coil (3, 4).

3. Segment (1) according to one of the preceding claims, wherein a feed conductor of each form-wound coil (3, 4, 5) is arranged in a first slot (6), the slot flanks of which are aligned parallel to the slot flanks of a second slot (7) in which the associated return conductor is arranged.

4. Segment (1) according to one of the preceding claims, wherein the slots (5, 7) point inwards viewed in the radial direction of the stator.

5. Segment (1) according to one of Claims 1 to 3, wherein the slots (6, 7) point outwards viewed in the radial direction of the stator.

6. Ring-shaped stator having at least two segments (1) according to one of Claims 1 to 5.

7. Electrical machine, in particular a wind power generator, having a ring-shaped stator according to Claim 6.

8. Wind turbine having an electrical machine according to Claim 7.

## Revendications

1. Segment (1) pour un stator annulaire d'une machine dynamoélectrique, qui comprend une section transversale en forme d'arc de cercle et qui, par adjonction d'un ou de plusieurs autres segments (1) de même type de construction, peut être complétée en le stator, dans lequel le segment a des encoches (6, 7), dans lesquelles au moins une première bobine (3) et au moins une deuxième bobine (4) sont disposées sous la forme d'un enroulement étagé, **caractérisé en ce que**
- la au moins une première bobine (3) et la au moins une deuxième bobine (4) sont des bobines formées sur gabarit,
- la au moins une première bobine (3) formée sur gabarit est coudée dans la région des têtes de bobine en direction radiale du stator vers l'extérieur et
- la au moins une deuxième bobine (4) formée sur gabarit est coudée dans la région des têtes de bobine en direction radiale du stator vers l'intérieur,
- la première et la deuxième bobines (3, 4) formées sur gabarit sont de même construction et sont insérées en sens opposé dans les encoches (2).

2. Segment (1) suivant la revendication 1, ayant au moins une troisième bobine (3) formée sur gabarit et non coudée, qui est disposée entre la première et la deuxième bobine (3, 4) formées sur gabarit.

3. Segment (1) suivant l'une des revendications précédentes, dans lequel un conducteur d'arrivée de chaque bobine (3, 4, 5) formée sur gabarit est disposé dans une première encoche (6), dont les flancs sont dirigés parallèlement aux flancs d'une deuxième encoche (7), dans laquelle le conducteur de retour associé est disposé.

4. Segment (1) suivant l'une des revendications précédentes, dans lequel les encoches (5, 7) sont tournées vers l'intérieur, considéré dans la direction radiale du stator.

5. Segment (1) suivant l'une des revendications 1 à 3, dans lequel les encoches (6, 7) sont tournées vers l'extérieur, considéré dans la direction radiale du stator.

6. Stator annulaire ayant au moins deux segments (1) suivant l'une des revendications 1 à 5.

7. Machine électrique, notamment génératrice d'éolienne, ayant un stator annulaire suivant la revendication 6.

8. Eolienne ayant une machine électrique suivant la revendication 7.
